# EUROPEAN PATENT APPLICATION

(11) **EP 4 383 784 A1**
(43) Date of publication of application: **12.06.2024**
(21) Application number: 21952825.4
(22) Date of filing: 05.08.2021
(51) Int. Cl.: H04W 16/28, H04W 76/19

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); MATSUMURA, Yuki, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2021/029221
(87) International publication number: WO 2023/013001

(57) **Abstract**

A terminal according to an aspect of the present disclosure includes: a receiving section that computes a radio link quality corresponding to one or more reference signals; a control section that detects a predicted beam failure on the basis of a predicted radio link quality at a future time computed based on the radio link quality; and a transmitting section that transmits information related to accuracy of prediction of the predicted radio link quality. According to an aspect of the present disclosure, communication quality can be preferably maintained.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is under study to make use of artificial intelligence (AI) technologies, such as machine learning (ML), for control, management, and the like of a network/device. For example, AI-aided beam management is under study that utilizes AI-aided estimation.

However, studies have not been progressed yet on specific details of the AI-aided beam management. Unless such details are appropriately defined, enhancement in communication throughput or communication quality may be suppressed.

In view of this, an object of the present disclosure is to provide a terminal, a radio communication method, and a base station that allow communication quality to be preferably maintained.

### Solution to Problem

A terminal according to an aspect of the present disclosure includes: a receiving section that computes a radio link quality corresponding to one or more reference signals; a control section that detects a predicted beam failure on the basis of a predicted radio link quality at a future time computed based on the radio link quality; and a transmitting section that transmits information related to accuracy of prediction of the predicted radio link quality.

### Advantageous Effects of Invention

According to an aspect of the present disclosure, communication quality can be preferably maintained.

### Brief Description of Drawings

[FIG. 1] FIG. 1 is a diagram to show an example of measurement for predicted BFR.
[FIG. 2] FIG. 2 is a diagram to show an example of the predicted BFR.
[FIG. 3] FIG. 3 is a diagram to show an example of a predicted BFR procedure according to a first embodiment.
[FIG. 4] FIG. 4 is a diagram to show an example of prediction related control according to the first embodiment.
[FIG. 5] FIG. 5 is a diagram to show an example of the prediction related control according to the first embodiment.
[FIG. 6] FIG. 6 is a diagram to show an example of the prediction related control according to the first embodiment.
[FIG. 7] FIG. 7 is a diagram to show an example of a time to perform the predicted BFR.
[FIG. 8] FIGS. 8A and 8B are each a diagram to show an example of information about times to perform the predicted BFR that are quantized.
[FIG. 9] FIGS. 9A and 9B are each a diagram to show an example of a time duration that can be used for prediction.
[FIG. 10] FIG. 10 is a diagram to show an example of computation of accuracy of prediction.
[FIG. 11] FIG. 11 is a diagram to show an example of the computation of the accuracy of prediction.
[FIG. 12] FIG. 12 is a diagram to show an example of computation of future prediction accuracy information.
[FIG. 13] FIG. 13 is a diagram to show an example of reception of predicted BFR acceptance information according to Embodiment 1.5.
[FIG. 14] FIG. 14 is a diagram to show an example of a timing to apply the predicted BFR according to Embodiment 1.6.
[FIG. 15] FIG. 15 is a diagram to show an example of a predicted BFR procedure according to a second embodiment.
[FIG. 16] FIG. 16 is a diagram to show an example of a predicted BFR MAC CE according to Embodiment 2.3.
[FIG. 17] FIG. 17 is a diagram to show an example of priority control of the BFR and predicted BFR according to a third embodiment.
[FIG. 18] FIG. 18 is a diagram to show an example of a schematic structure of a radio communication system according to one embodiment.
[FIG. 19] FIG. 19 is a diagram to show an example of a structure of a base station according to one embodiment.
[FIG. 20] FIG. 20 is a diagram to show an example of a structure of a user terminal according to one embodiment.
[FIG. 21] FIG. 21 is a diagram to show an example of a hardware structure of the base station and the user terminal according to one embodiment.

### Description of Embodiments

### (Application of Artificial Intelligence (AI) Technologies to Radio Communication)

For future radio communication technologies, it is under study to make use of AI technologies for control, management, and the like of a network/device.

For example, for future radio communication technologies, higher accuracy in channel estimation (which may be referred to as channel measurement) is desired, for beam management, decoding of a received signal, and the like, particularly in communication using a beam.

The channel estimation may be performed using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a sounding reference signal (SRS), and the like, for example.

In order to perform highly accurate channel estimation, known radio communication technologies require a large amount of resources for estimation (for example, resources for transmission of reference signals) and thus require channel estimation of every antenna port to be used. Increase in resources for DMRS, CSI-RS, and/or the like to achieve highly accurate channel estimation may cause decrease in resources for data transmission/reception (for example, downlink shared channel (Physical Downlink Shared Channel (PDSCH)) resources, uplink shared channel (Physical Uplink Shared Channel (PUSCH)) resources).

Known radio communication technologies allow control based on a present or past measurement result, however, the control may be late, for example, in a case that the link is disconnected due to deterioration in the radio quality.

For the future, it is studied to use AI technologies, such as machine learning (ML), to achieve highly accurate channel estimation with a smaller amount of resources and measurement to predict the future. Such channel estimation may be referred to as AI-aided estimation. Beam management using the AI-aided estimation may be referred to as AI-aided beam management.

As an example of the AI-aided beam management, when AI is used in a terminal (which is also referred to as a user terminal, User Equipment (UE), or the like), the AI may predict a future beam measurement value. The UE may trigger enhanced beam failure recovery (enhanced BFR) involving prediction.

As an example of the AI-aided beam management, when AI is used in a base station (BS), the AI may predict a future beam measurement value (for example, a measurement value of a narrow beam), or may estimate (derive) a measurement value of a narrow beam on the basis of management of a small number of beams. The UE may receive a beam indication with a time offset.

However, studies have not been progressed yet on specific details of the AI-aided beam management. Unless such details are appropriately defined, enhancement in communication throughput or communication quality may be suppressed.

In view of this, the inventors of the present invention came up with the idea of a control method and the like preferable for BFR involving prediction. Note that each embodiment of the present disclosure may be applied to a case where AI/prediction is not used.

In one embodiment of the present disclosure, the UE/BS trains an ML model in a training mode and performs the ML model in a test mode (which is also referred to as testing mode or the like). In the test mode, validation of the accuracy of the ML model (trained ML model) trained in the training mode may be performed.

In the present disclosure, the UE/BS may input channel state information, a reference signal measurement value, and/or the like with respect to the ML model, and may output highly accurate channel state information/measurement value/beam selection/location, future channel state information/radio link quality, and/or the like.

Note that, in the present disclosure, the AI may be interpreted as an object (which is also referred to as subject, target, data, function, program, or the like) that has (performs) at least one of the following features:
- estimation based on information observed or collected;
- selection based on information observed or collected; and
- prediction based on information observed or collected.

In the present disclosure, such an object may be, for example, an apparatus, a device, and/or the like, such as a terminal, a base station. The object may correspond to a program included in the apparatus.

In the present disclosure, the ML model may be interpreted as an object that has (performs) at least one of the following features:
- feeding information to generate an estimated value;
- feeding information to predict an estimated value;
- feeding information to find a feature; and
- feeding information to select an operation.

In the present disclosure, the ML model may be interpreted as at least one of an AI model, predictive analytics, a predictive analytics model, and the like. The ML model may be derived using at least one of regression analysis (for example, linear regression analysis, multiple regression analysis, logistic regression analysis), support-vector machine, random forest, neural network, deep learning, and the like. In the present disclosure, a model may be interpreted as at least one of an encoder, a decoder, a tool, and the like.

Based on information that is input, the ML model output information of at least one of an estimated value, a predicted value, a selected operation, a classification, and the like.

The ML model may include supervised learning, unsupervised learning, reinforcement learning, and the like. The supervised learning may be used for learning of general rules in mapping an input to an output. The unsupervised learning may be used for learning of features of data. The reinforcement learning may be used for learning of operations to maximize an objective (goal).

Embodiments described below mainly assume a case where the supervised learning is used for the ML model, but this is not restrictive.

In the present disclosure, implementation, practice, operation, performance, and the like may be interchangeably interpreted. In the present disclosure, test, after-training, use in production, use in actuality, and the like may be interchangeably interpreted. A signal may be interchangeably interpreted as a signal/channel.

In the present disclosure, the training mode may correspond to a mode (in other words, an operation mode in a training period) for the UE/BS to transmit/receive a signal for the ML model. In the present disclosure, the test mode may correspond to a mode (in other words, an operation mode in a test period) for the UE/BS to perform the ML model (for example, perform the trained ML model to predict an output).

In the present disclosure, the training mode may mean a mode in which, regarding a specific signal to be transmitted in the test mode, the specific signal with a large overhead (for example, a large amount of resources) is transmitted.

In the present disclosure, the training mode may mean a mode to reference a first configuration (for example, first DMRS configuration, first CSI-RS configuration). In the present disclosure, the test mode may mean a mode to reference a second configuration (for example, second DMRS configuration, second CSI-RS configuration) different from the first configuration. At least one of time resources, frequency resources, code resources, and ports (antenna ports) that are related to measurement may be configured more for the first configuration than the second configuration.

Embodiments according to the present disclosure will be described in detail with reference to the drawings as follows. The radio communication methods according to respective embodiments may each be employed individually, or may be employed in combination.

In the following embodiments, the relevant entities are a UE and a BS in order to describe an ML model related to UE-BS communication, but application of each embodiment of the present disclosure is not limited to this. For example, for communication between other entities (for example, UE-UE communication), the UE and BS in the following embodiments may be interpreted as a first UE and second UE. In other words, any of the UE, the BS, and the like in the present disclosure may be interpreted as any UE/BS.

In the present disclosure, "A/B" and "at least one of A and B" may be interchangeably interpreted.

In the present disclosure, activate, deactivate, indicate, select, configure, update, determine, and the like may be interchangeably interpreted. In the present disclosure, "support," "control," "controllable," "operate," and "operable" may be interchangeably interpreted.

In the present disclosure, radio resource control (RRC), an RRC parameter, an RRC message, a higher layer parameter, an information element (IE), and a configuration may be interchangeably interpreted. In the present disclosure, a Medium Access Control control element (MAC Control Element (CE)), an update command, and an activation/deactivation command may be interchangeably interpreted.

In the present disclosure, a panel, a UE panel, a panel group, a beam, a beam group, a precoder, an Uplink (UL) transmission entity, a TRP, spatial relation information (SRI), a spatial relation, an SRS resource indicator (SRI), an SRS resource, a control resource set (CORESET), a Physical Downlink Shared Channel (PDSCH), a codeword, a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a spatial relation group, a downlink TCI state (DL TCI state), an uplink TCI state (UL TCI state), a unified TCI state, a common TCI state, quasi-co-location (QCL), a QCL assumption, and the like may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the present disclosure, the CSI-RS may be interchangeably interpreted as at least one of a non-zero power (Non Zero Power (NZP)) CSI-RS, a zero power (ZP) CSI-RS, and CSI interference measurement (CSI-IM).

In the present disclosure, an RS to be measured/reported may mean an RS to be measured/reported for the predicted BFR.

### (Radio Communication Method)

In embodiments below, a UE may trigger the enhanced BFR (which may be referred to as predicted BFR) involving prediction. Hereinafter, BFR involving prediction, predicted BFR, enhanced BFR, future BFR, recommended TCI state indication, recommended beam indication, and the like may be interchangeably interpreted.

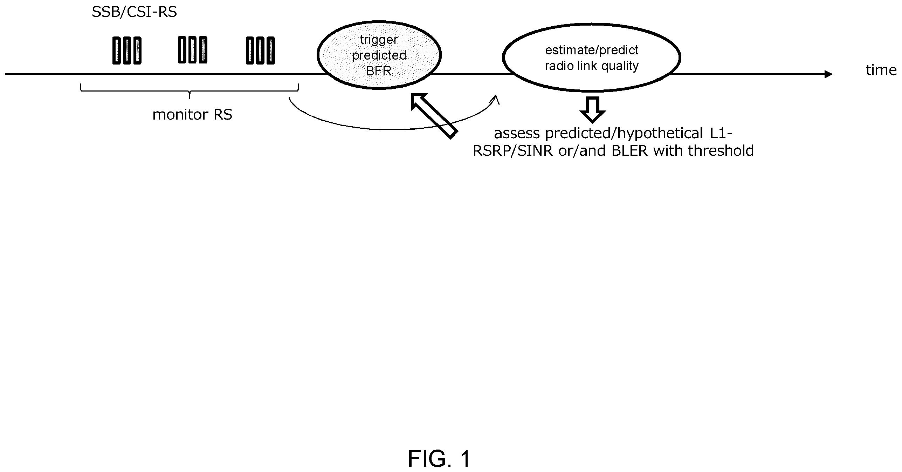

FIG. 1 is a diagram to show an example of measurement for predicted BFR. In this example, a BS transmits RSs (SSBs/CSI-RSs), and the UE including AI predicts a future beam failure on the basis of beam measurement (L1-RSRP measurement). Note that the RSs may be, for example, CSI-RSs, SSBs, and/or the like.

The UE monitors the RSs to compute a predicted radio link quality. Based on the predicted radio link quality, the UE judges whether to trigger the predicted BFR.

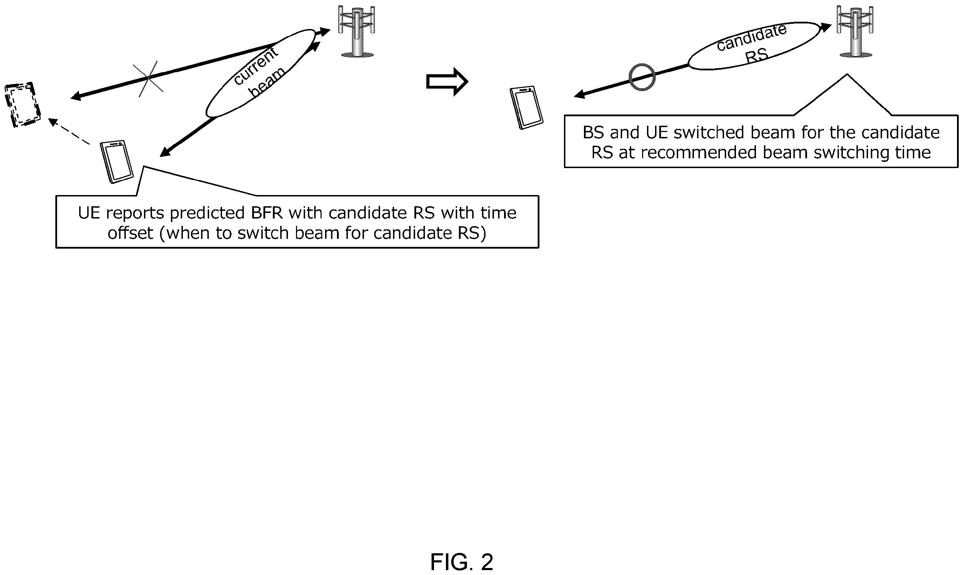

FIG. 2 is a diagram to show an example of the predicted BFR. In this example, the UE having predicted occurrence in the future of a beam failure in a current beam reports, as a predicted BFR request, information related to a candidate RS together with a time offset (when to switch to a beam for the candidate RS). Thereafter, the UE receives information indicating that the predicted BFR is accepted by the base station. The UE and BS switch to the beam for the candidate RS at the timing in accordance with the time offset. This allows occurrence of a beam failure to be suppressed in advance. Note that the occurrence of the beam failure may be interchangeably interpreted as detection of a beam failure.

Note that, in the present disclosure, a timing, a time point, a time, a slot, a subslot, a symbol, a subframe, and the like may be interchangeably interpreted.

The embodiment below relates to details, processes, transmission timings, and/or the like of the predicted BFR.

### <First Embodiment>

A first embodiment relates to a predicted BFR procedure triggered using a physical random access channel (PRACH).

The predicted BFR procedure in the first embodiment may be broadly divided into the following embodiments:
- Embodiment 1.1: assess a future radio link quality;
- Embodiment 1.2: trigger predicted BFR using a PRACH;
- Embodiment 1.3: report when to perform beam switching;
- Embodiment 1.4: report accuracy of prediction;
- Embodiment 1.5: receive information indicating that the predicted BFR is accepted by the base station; and
- Embodiment 1.6: transmit a signal after reception of a predicted BFR response (update QCL/spatial relation).

Note that the transmission of the PRACH and the reception of the BFR response may be performed in a cell different from a cell (cell to which a candidate RS belongs) where a beam failure is predicted. The predicted BFR response may be a random access response (RAR) transmitted in response to the PRACH for the predicted BFR in Embodiment 1.2.

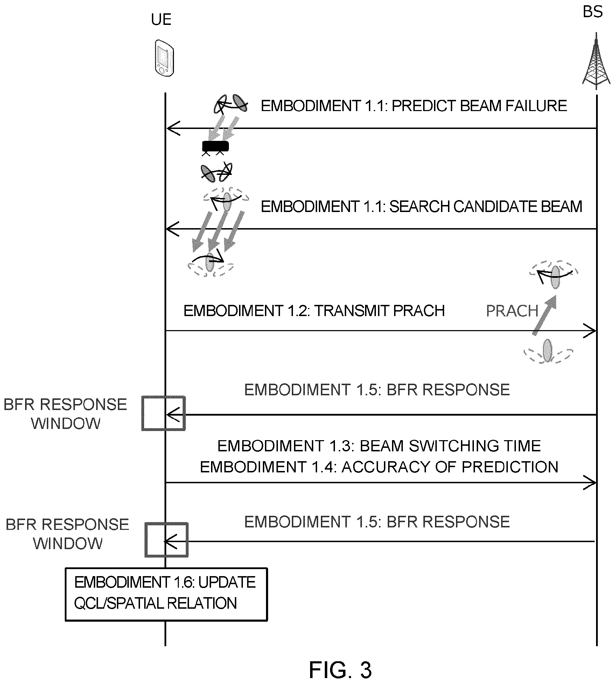

FIG. 3 is a diagram to show an example of the predicted BFR procedure according to the first embodiment. In Embodiment 1.1, for example, whether every beam is less than a threshold value is predicted. When such prediction is made, the UE selects a candidate beam (candidate RS) with a predicted L1-RSRP/SINR being maximum. In Embodiment 1.2, the UE transmits a PRACH on a PRACH occasion related to the candidate beam. Note that a "candidate" in the present disclosure may be interchangeably interpreted as a "predicted candidate".

As necessary, the UE may receive the predicted BFR response according to Embodiment 1.5 and/or may perform reporting of Embodiment 1.3/1.4. In Embodiment 1.6, after reception of the predicted BFR response, update of QCL/spatial relation with respect to a specific signal may be performed.

Hereinafter, Embodiment 1.1 to Embodiment 1.6 will be described.

### [Embodiment 1.1]

In Embodiment 1.1, the UE may assess a future radio link quality on the basis of a specific RS. For example, the UE may compute a radio link quality with respect to the specific RS, and, based on the radio link quality (current radio link quality), predict a future radio link quality. This future radio link quality may be referred to as a predicted radio link quality. Note that the predicted radio link quality may be derived based on a specific RS (even without computing the current radio link quality).

The specific RS may be an RS corresponding to an RS index (or a set of RS indices) configured by a higher layer parameter in order to assess a future radio link quality. The RS index (indices) may be CSI-RS resource configuration ID(s) or may be SSB index (indices).

These RS indices may be the same as RS indices specified by at least one of an RRC parameter (for example, failureDetectionResource) indicating a resource for failure detection and an RRC parameter (for example, candidateBeamRSList, candidateBeamRSListExt, candidateBeamRSSCellList, or the like) indicating a candidate beam RS.

The specific RS may be an RS implicitly determined by RRC configuration. For example, the UE may assess a future radio link quality by using an RS indicated by a TCI state of a CORESET of a PDCCH monitored by the UE. Note that, when one TCI state includes two or more RSs, the UE may determine which RS to reference on the basis of a specific QCL type (for example, type D).

The UE may detect a future beam failure/beam candidate on the basis of a future specific radio link quality.

The specific radio link quality may be a predicted Layer 1 (L1)-Reference Signal Received Power (RSRP) (reference signal received power in layer 1), may be a hypothetical L1-RSRP, or may be a block error rate (BLER) of hypothetical PDCCH transmission predicted. In the present disclosure, the radio link quality may be at least one of an L1-RSRP, an L1-Signal to Interference plus Noise Ratio (SINR), a BLER, and the like.

With respect to one or more (for example, all) of the specific RSs, depending on whether the future specific radio link quality is below or above a threshold value, the UE may detect a future beam failure/beam candidate. For example, with respect to one or more of the specific RSs, when the future specific radio link quality is below the threshold value, the UE may judge occurrence of a predicted beam failure and notify the higher layer (MAC layer) of a predicted beam failure instance. When a counter that counts based on reception of the instance exceeds a certain value, in the MAC layer, the UE may judge occurrence of a predicted beam failure.

The UE may determine the threshold value on the basis of a specific rule, on the basis of any one or a combination of physical layer signaling (for example, DCI), higher layer signaling (for example, RRC signaling, MAC CE), and a specific signal/channel, or on the basis of a UE capability. Note that the threshold value may correspond to the same threshold value as that used for BFR defined in existing Rel-15/16 NR.

The UE may determine a time (future time) to predict an L1-RSRP on the basis of a specific rule, on the basis of any one or a combination of physical layer signaling (for example, DCI), higher layer signaling (for example, RRC signaling, MAC CE), and a specific signal/channel, or on the basis of a UE capability.

The UE may perform detection of a beam failure/candidate beam for the predicted BFR when a condition based on at least one of the following is satisfied:
- parameter (for example, beamFailureInstanceMaxCount) related to the number of times (number of occurrence times) of beam failure events (instances) since the predicted BFR is triggered;
- parameter (for example, rlmInSyncOutOfSyncThreshold, rsrp-ThresholdSSB, rsrp-ThresholdBFR) related to the threshold value; and
- beam failure detection timer corresponding to a period to check the number of beam failure events for the predicted PFR.

The UE may determine these parameters separately from a parameter for BFR, or may determine the parameters on the basis of the parameter for BFR. For example, regarding the parameters described above, the UE may be configured with information related to a difference value between the BFR and the predicted BFR, by a higher layer parameter.

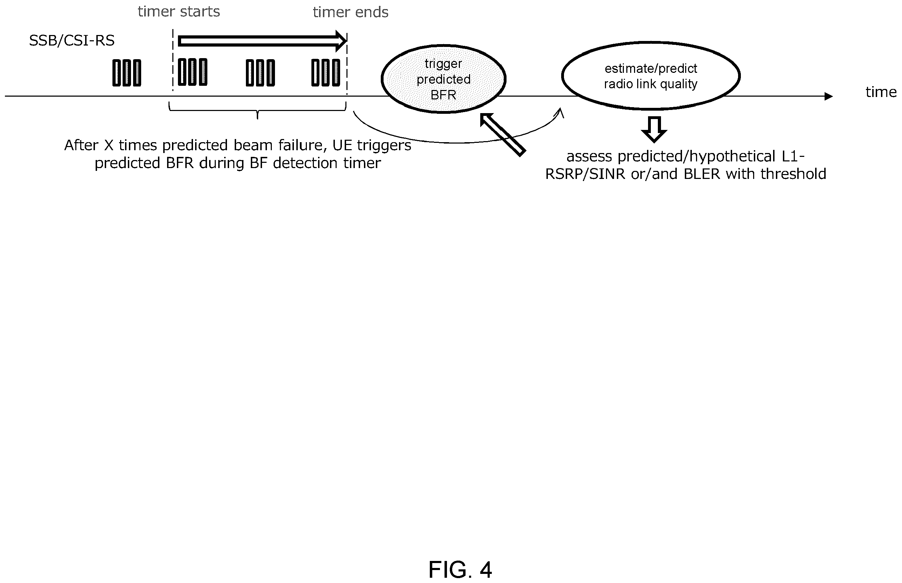

FIG. 4 is a diagram to show an example of prediction related control according to the first embodiment. The UE monitors RSs (SSBs/CSI-RSs), and, when detects a predicted beam failure, starts a beam failure detection timer. When a specific number of times (for example, X times) of predicted beam failures occur before the timer ends, the UE triggers the predicted BFR.

### [[Prediction Time]]

The UE may predict an estimated/predicted radio link quality at a future time (which may be referred to as predicted time, prediction time, prediction timing, or the like) on the basis of present/past RS measurement.

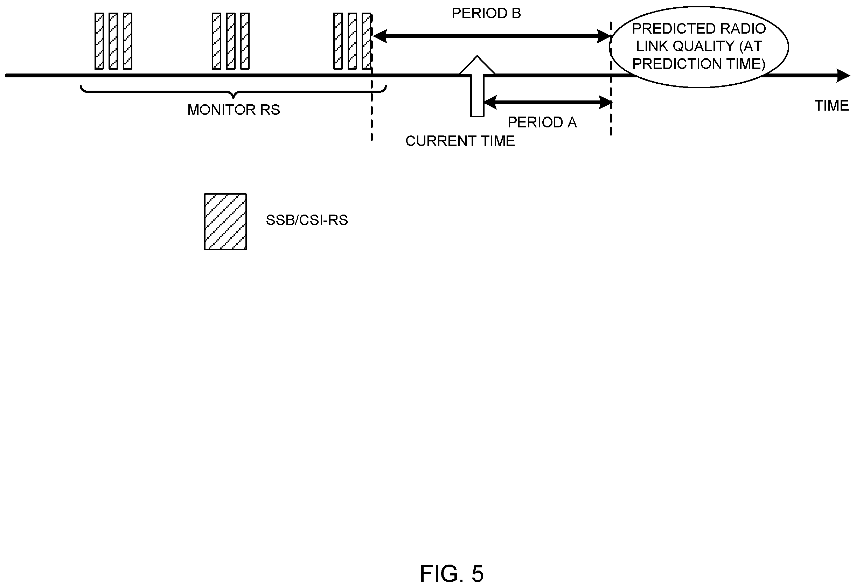

FIG. 5 is a diagram to show an example of the prediction related control according to the first embodiment. The UE monitors RSs (SSBs/CSI-RSs) to predict a radio link quality at a prediction time after a time offset from a certain timing.

Here, the certain timing may be a present/current time for the UE to perform radio link quality prediction or may be a reception timing of a specific RS to be measured for the prediction (for example, the last reception timing of the specific RS). The time offset for the former corresponds to period A as illustrated, and the time offset for the latter corresponds to period B as illustrated. The certain timing may be referred to as a reference time.

The time offset may be expressed in a unit of slots or may be expressed in a unit of seconds (for example, a unit of milliseconds), for example.

The UE may determine the time offset on the basis of a specific rule, on the basis of any one or a combination of physical layer signaling (for example, DCI), higher layer signaling (for example, RRC signaling, MAC CE), and a specific signal/channel, or on the basis of a UE capability.

Note that, when no time offset is configured, the UE may autonomously determine the prediction time or may judge the prediction time as a default prediction time.

Note that, in the present disclosure, the prediction time and the time offset may be interchangeably interpreted.

During a beam failure timer (for example, which may be the beam failure detection timer or another timer) is running, the UE may assess predicted radio link qualities at the same prediction time even when the prediction is based on RSs of different current times.

During the beam failure timer is running, for respective predictions based on RSs of different current times, the UE may assess predicted radio link qualities at different prediction times applied with respective time offsets.

When a certain number of times or more of predicted beam failures are detected during the beam failure timer running, the UE may trigger the predicted BFR.

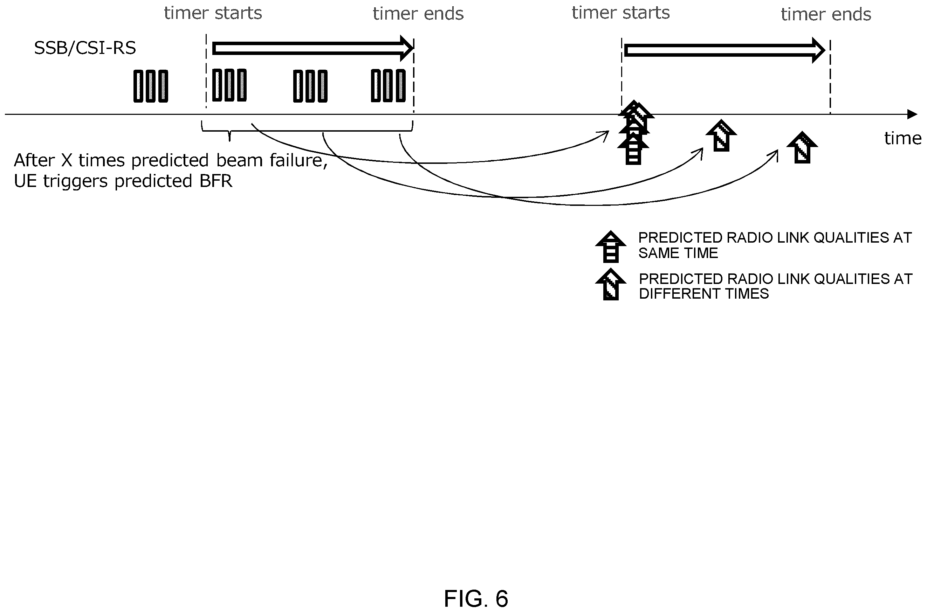

FIG. 6 is a diagram to show an example of the prediction related control according to the first embodiment. This example is similar to FIG. 4, but is different in that whether predicted radio link qualities during the timer running are predicted with respect to the same time or predicted with respect to different times is indicated. If the predicted radio link qualities are predicted with respect to the same future time, each of the measured RSs and the same future time get closer to each other every time measurement is performed, so that the accuracy of prediction is expected to be improved gradually. If the predicted radio link qualities are predicted with respect to different future times, a predicted beam failure can be detected by predicting that a beam failure continues with respect to the different times.

### [Embodiment 1.2]

In Embodiment 1.2, the UE may trigger the predicted BFR by using a PRACH, on the basis of Embodiment 1.1. The PRACH for the predicted BFR may be referred to as a PRACH for a predicted BFR request or may be referred to as a predicted BFR request.

The UE may trigger the predicted BFR by using a PRACH resource related to a candidate RS (CSI-RS/SSB) recommended for the BS to switch to in the future. Note that the PRACH resource may mean at least one of a time/frequency resource for the PRACH (for example, a PRACH occasion), a PRACH index, a sequence of the PRACH, and the like.

The PRACH resource may be a PRACH resource configured dedicatedly for the predicted BFR or may be a PRACH resource configured for existing BFR.

The UE may trigger the predicted BFR by using a contention-based random access (CBRA) procedure. In this case, the UE may transmit the PRACH by using a PRACH resource configured with respect to a candidate RS for the predicted BFR or an RS for achievement of the highest radio link quality.

The UE may transmit not only a C-RNTI but also information about the candidate RS recommended for the BS to switch to in the future, by using a PUSCH (Message 3) scheduled by a UL grant of a random access response (RAR). Such information may be transmitted by using a MAC CE. This will be described in a second embodiment below.

The UE may be configured to be able to trigger PRACH-based predicted BFR, by a higher layer parameter.

The UE may trigger the predicted BFR by using a contention-free random access (CFRA) procedure.

### [Embodiment 1.3]

In Embodiment 1.3, the UE may report information related to a time to perform beam switching. Note that the "beam switching is performed" may be interchangeably interpreted as the "predicted BFR is applied (performed)", "base station switches the beam", "base station transmits a candidate RS", and the like.

### [[Contention-free Random Access Procedure]]

After the PRACH transmission, the UE may monitor a PDCCH to which a PUSCH resource for reporting of a PRACH (or beam) switching timing is to be allocated. The PDCCH may be monitored in a CORESET related to a search space (SS) set for the predicted BFR or an SS set configured for the BFR (corresponding to an RRC parameter "recoverySearchSpaceId").

The UE may report the information related to the time to perform beam switching by using a PUSCH. Such information may be transmitted by using a MAC CE. This will be described in the second embodiment below.

Note that, when the time to perform beam switching is configured/determined in accordance with a specific rule, the reporting of the information related to the time may be omitted.

### [[Contention-based Random Access Procedure]]

The UE may transmit not only a C-RNTI but also information about a time offset for the predicted BFR to be activated (information related to the time to perform beam switching), by using a PUSCH (Message 3) scheduled by a UL grant of a random access response (RAR). Such information may be transmitted by using a MAC CE. This will be described in the second embodiment below.

### [[Time to Perform Predicted BFR]]

The UE may be configured with a time offset between signaling related to the predicted BFR and a time (which will be described in Embodiment 1.5 below) to perform (apply) the predicted BFR, by a higher layer parameter.

The UE may report the time offset between the signaling related to the predicted BFR and the time to apply the predicted BFR.

Note that the signaling related to the predicted BFR may be at least one of the following:
- a (latest) RS for computation of a predicted radio link quality;
- a PRACH/scheduling request (SR)/MAC CE/PUSCH for the predicted BFR; and
- a predicted BFR response.

The UE may apply the predicted BFR at a timing of at least one of the following:
- after Y symbols + time offset, from the last symbol of the signaling related to the predicted BFR;
- after the time offset, from the last symbol of the signaling related to the predicted BFR; and
- after the maximum value of the time offset + a specific number (for example, 28) of symbols, from the last symbol of the signaling related to the predicted BFR.

The UE may determine the value of Y on the basis of a specific rule, on the basis of any one or a combination of physical layer signaling (for example, DCI), higher layer signaling (for example, RRC signaling, MAC CE), and a specific signal/channel, or on the basis of a UE capability.

In the present disclosure, the prediction time may be interpreted as at least one of the above-described timings.

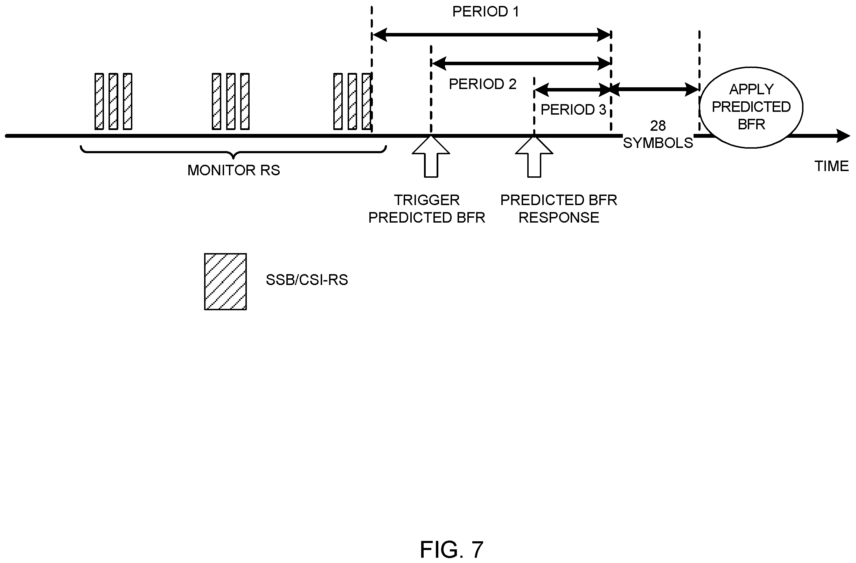

FIG. 7 is a diagram to show an example of a time to perform the predicted BFR.

Period 1 illustrated corresponds to the (maximum value of) time offset + 28 symbols in a case that the signaling related to the predicted BFR is the (latest) RS for computation of the predicted radio link quality.

Period 2 corresponds to the (maximum value of) time offset + 28 symbols in a case that the signaling related to the predicted BFR is a trigger for the predicted BFR (for example, a PRACH/SR/MAC CE/PUSCH transmission for the predicted BFR).

Period 3 corresponds to the (maximum value of) time offset + 28 symbols in a case that the signaling related to the predicted BFR is the predicted BFR response.

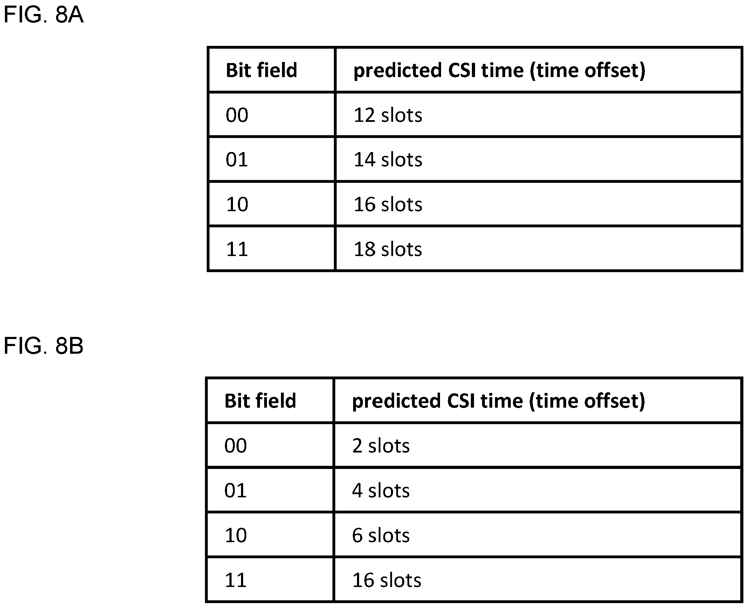

FIGS. 8A and 8B are each a diagram to show an example of information about times to perform the predicted BFR that are quantized.

The UE may transmit, as information about a time to perform the predicted BFR, a bit field indicating one time offset selected from time offsets configured. In FIG. 8A, it is assumed that the UE is configured with four time offsets (12, 14, 16, and 18 slots) corresponding to respective bit fields by using an RRC parameter.

Note that, when the UE is configured with only one time offset, the UE need not transmit the information about the time to perform the predicted BFR (because the base station knows the time offset assumed by the UE).

The UE may transmit, as the information about the time to perform the predicted BFR, a bit field indicating one time offset selected from time offsets defined in advance. In FIG. 8B, four time offsets (2, 4, 6, and 8 slots) corresponding to respective bit fields may be defined in advance, for example in a specification.

Note that, when the UE handles a time offset, the UE may determine a time duration that can be used for prediction on the basis of the time offset. The time to perform the predicted BFR may present one or more in the time duration.

In the present disclosure, in order to determine the time duration, the UE may report/receive/determine/be configured with a time offset and window size, instead of the time offset.

The UE may predict a radio link quality in a specific time instant (for example, a specific slot) during the time duration specified by the time offset and window size.

In the present disclosure, in order to determine the time duration, the UE may report/receive/determine/be configured with two time offsets, instead of one time offset.

The UE may predict a radio link quality in a specific time instant (for example, a specific slot) during the time duration specified by the two time offsets.

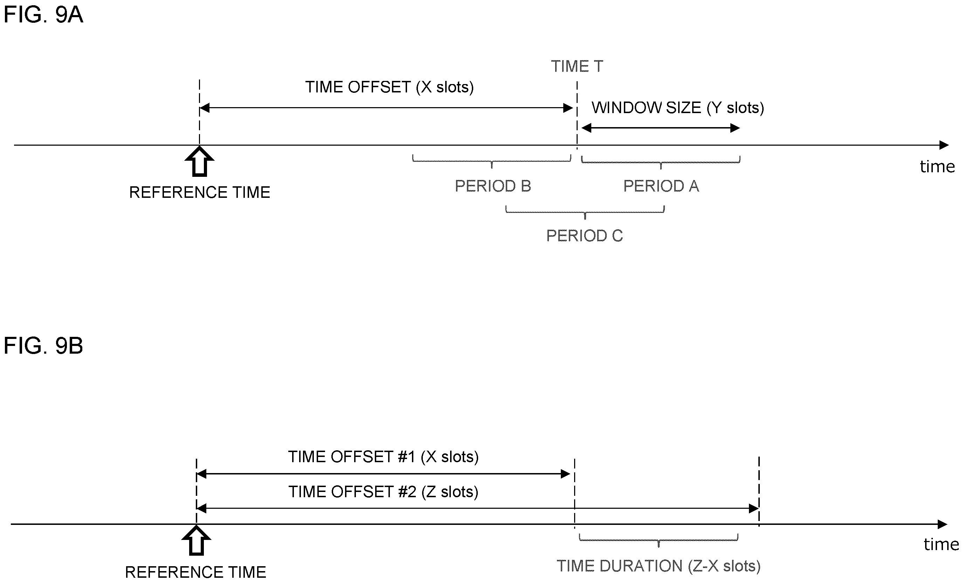

FIG. 9A and 9B are each a diagram to show an example of a time duration that can be used for prediction.

FIG. 9A shows an example in which the time duration is specified by a time offset and window size. The time duration may be at least one of periods A to C illustrated. Period A is, with a point (time T) specified referencing a reference time by the time offset being the start time, a period (period after the point) of the window size width. Period B is, with the point (time T) specified referencing the reference time by the time offset being the end time, a period (period before the point) of the window size width. Period C is, with the point (time T) specified referencing the reference time by the time offset being the center of the window size width, a period (including a period before and after the point) of the window size width.

FIG. 9B shows an example in which the time duration is specified by two time offsets (first time offset and second time offset). The time duration may be a period illustrated. One of a point specified by the first time offset referencing a reference time and a point specified by the second time offset referencing the reference time is the start time of the period, and the other is the end time. The length of the period may be expressed as Z - X, assuming the second time offset (for example, Z slots) > the first time offset (for example, X slots), for example.

### [Embodiment 1.4]

### [[Reporting of Accuracy of Prediction]]

The UE may report information related to accuracy of prediction (hereinafter, also referred to as prediction accuracy information). The prediction accuracy information may include information (hereinafter, also referred to as past prediction accuracy information) related to accuracy of past prediction (past prediction performance) and/or may include information (hereinafter, also referred to as future prediction accuracy information) related to accuracy expected for future prediction (expected performance).

The past prediction accuracy information may be at least one of the following:
- information about a measured radio link quality without involving prediction regarding information about a predicted radio link quality reported;
- information indicating whether a predicted error falls within a certain range; and
- an average performance difference.

Here, the information about the measured radio link quality without involving prediction regarding the information about the predicted radio link quality reported may correspond to information about a radio link quality without involving prediction based on measurement performed when a certain prediction time has actually come after transmission of information about a predicted radio link quality with respect to the prediction time. Note that the UE may report, as the information about the radio link quality without involving prediction, a difference value from a predicted value indicated in the information about the predicted radio link quality reported.

The information indicating whether the predicted error falls within the certain range may indicate whether the error falls within a range of X % confident section (for example, X = 95). Such information may be expressed as Y bits (for example, Y = 1). The predicted error may be expressed by an error (difference) between a predicted RSRP and an RSRP actually measured at the time, for example.

The UE may determine the certain range on the basis of a specific rule, on the basis of any one or a combination of physical layer signaling (for example, DCI), higher layer signaling (for example, RRC signaling, MAC CE), and a specific signal/channel, or on the basis of a UE capability.

The average performance difference may correspond to average performance difference information over certain time intervals or a specific number of times of measurement.

The UE may determine the time intervals or number of times of measurement on the basis of a specific rule, on the basis of any one or a combination of physical layer signaling (for example, DCI), higher layer signaling (for example, RRC signaling, MAC CE), and a specific signal/channel, or on the basis of a UE capability.

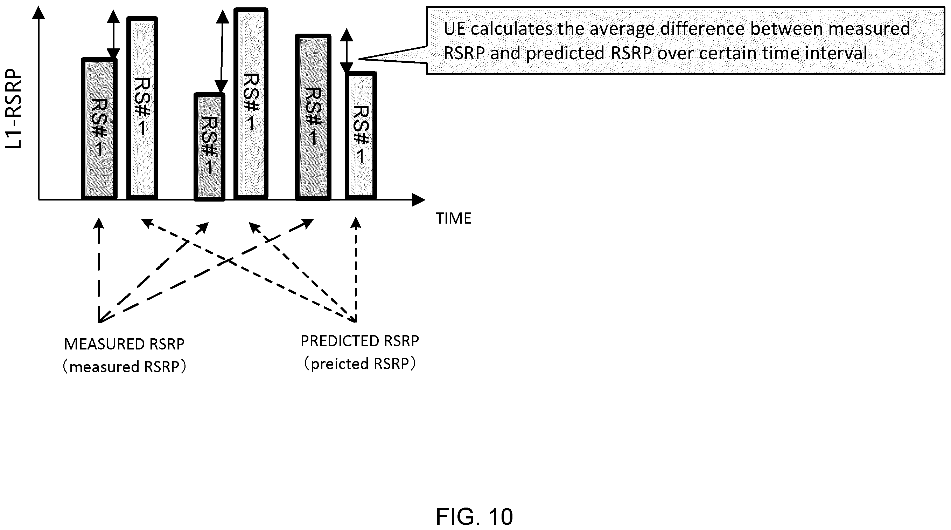

FIG. 10 is a diagram to show an example of computation of accuracy of prediction. In this example, for the same RS #1 over a certain time, three predicted RSRPs and RSRPs actually measured at the respective times are indicated. The UE may compute the average difference between the measured RSRPs and the predicted RSRPs at the three time instants in the period illustrated, and report the average difference, as an average performance difference (past prediction accuracy information), to the base station.

The future prediction accuracy information may be at least one of the following:
- an expected difference between a predicted value (for example, predicted RSRP) and a measured value (for example, measured RSRP) used for prediction of the predicted value;
- information related to the variance of the error between the predicted value and the actual value;
- a range within which Y % of the prediction error fall; and
- an average performance difference.

As the range within which Y % of the prediction error fall, the UE may report ± 3dB when, for example, the Y % of the error falls within ± 3dB.

The UE may determine the Y on the basis of a specific rule, on the basis of any one or a combination of physical layer signaling (for example, DCI), higher layer signaling (for example, RRC signaling, MAC CE), and a specific signal/channel, or on the basis of a UE capability.

The average performance difference may correspond to average performance difference information over certain time intervals or a specific number of times of measurement.

The UE may determine the time intervals or number of times of measurement on the basis of a specific rule, on the basis of any one or a combination of physical layer signaling (for example, DCI), higher layer signaling (for example, RRC signaling, MAC CE), and a specific signal/channel, or on the basis of a UE capability.

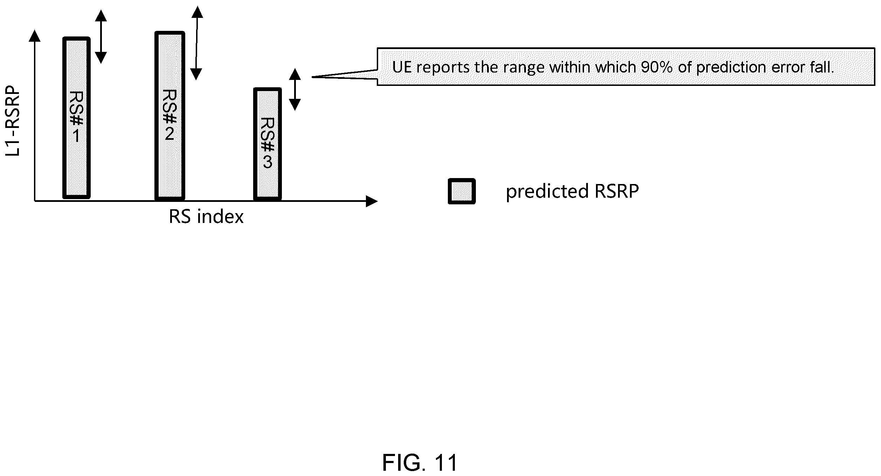

FIG. 11 is a diagram to show an example of computation of accuracy of prediction. In this example, for RSs corresponding to three RS indices (RSs #1 to #3), the respective predicted values and ranges within which 90% of the respective prediction errors fall are indicated. The UE may report, as the future prediction accuracy information, information indicating the respective ranges.

Note that the UE may report the prediction accuracy information for each RS index, for each RS group, or for all the RS indices.

The UE may determine the granularity of the expected accuracy (preciseness) on the basis of a specific rule, on the basis of any one or a combination of physical layer signaling (for example, DCI), higher layer signaling (for example, RRC signaling, MAC CE), and a specific signal/channel, or on the basis of a UE capability.

### [[Timing of Reporting of Prediction Accuracy Information]]

The prediction accuracy information may be reported periodically/semi-persistently/aperiodically. The transmission periodicity of the prediction accuracy information may be the same as or different from a transmission periodicity of a predicted beam report (CSI report).

The UE may determine the periodicity/timing of reporting of the prediction accuracy information on the basis of a specific rule, on the basis of any one or a combination of physical layer signaling (for example, DCI), higher layer signaling (for example, RRC signaling, MAC CE), and a specific signal/channel, or on the basis of a UE capability.

The UE may report the prediction accuracy information when at least one of the following conditions is satisfied:
- a computed (or predicted) error goes out of a specific range X times;
- the computed (or predicted) error is greater or smaller than a threshold value; and
- a difference between a reported error (prediction accuracy information reported in the past) and the computed (or predicted) error is greater than a threshold value.

The UE may determine the specific range, the value of X, the threshold value, and the like on the basis of a specific rule, on the basis of any one or a combination of physical layer signaling (for example, DCI), higher layer signaling (for example, RRC signaling, MAC CE), and a specific signal/channel, or on the basis of a UE capability.

The prediction accuracy information may be reported included in a predicted BFR MAC CE (described below) or may be reported separately from the predicted BFR MAC CE. The prediction accuracy information may be reported by using a MAC CE for transmission of the prediction accuracy information, for example.

Regarding the future prediction accuracy information, the UE may determine what time point of prediction the accuracy is to be computed based on, on the basis of the above-described time offset. The time offset may be configured by RRC or may correspond to a time offset included in a predicted beam report (CSI report).

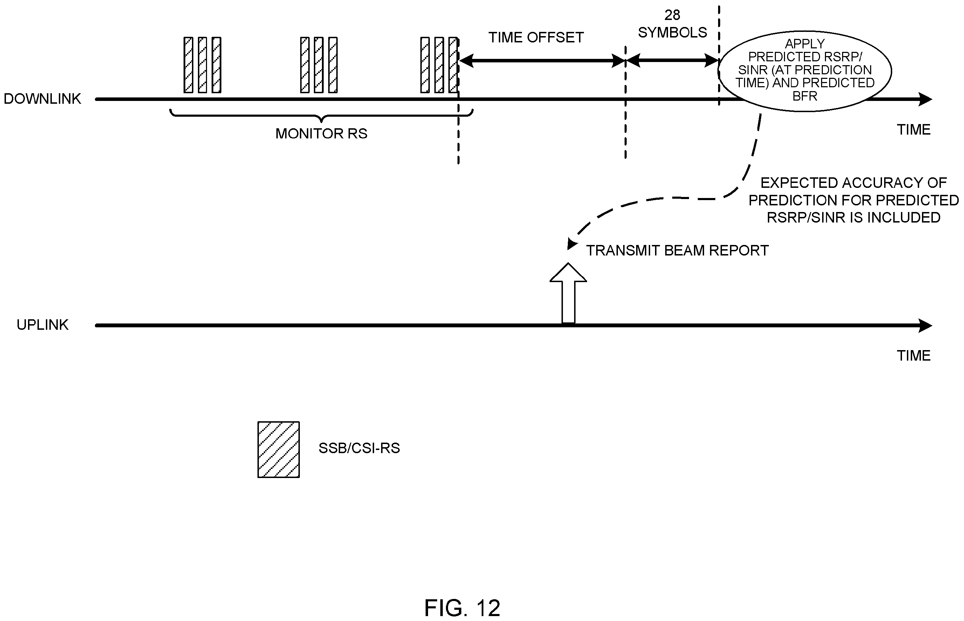

FIG. 12 is a diagram to show an example of computation of the future prediction accuracy information. In this example, the UE may derive and report an expected accuracy of prediction for a predicted RSRP/SINR at a prediction time after a time offset + 28 symbols from the end of the last symbol of an RS having been monitored.

### [Embodiment 1.5]

The UE may receive information (which may be referred to as predicted BFR acceptance information) about whether the predicted BFR is accepted by the BS. The information may be notified, to the UE, included in a predicted BFR response. Note that the predicted BFR response may be transmitted in response to the reception, at the BS, of the PRACH for the predicted BFR.

The UE may judge the predicted BFR acceptance information on the basis of a PDCCH. In this case, the predicted BFR response need not include any RS index. Specifically, the UE may judge the predicted BFR acceptance information on the basis of at least one of the following:
- a PDCCH reception of a DCI format scheduling a PUSCH transmission that has the same HARQ process number as the time of the first PUSCH transmission (for example, transmission of the predicted BFR MAC CE) and that has an NDI field value toggled;
- a PDCCH reception in an (RAR) window; and
- DCI (for example, a DCI field for the predicted BFR response).

For example, when the UE receive the PDCCH described above, the UE may assume that acceptance is notified as the predicted BFR acceptance information.

Note that the UE may be configured with information related to a search space set for monitoring the PDCCH indicating the predicted BFR acceptance information, by a higher layer parameter.

The UE may judge the predicted BFR acceptance information on the basis of a MAC CE via a PDSCH. For example, when the UE receive the MAC CE described above, the UE may assume that acceptance is notified as the predicted BFR acceptance information.

The MAC CE may be the predicted BFR MAC CE. In this case, the predicted BFR response need not include any RS index. Note that the MAC CE may indicate which cell (primary cell, special cell, secondary cell, or the like) the predicted BFR is accepted for.

The MAC CE may be an activation command (activation MAC CE) related to a TCI state for a PDCCH/a spatial relation for a PUCCH. In this case, a new MAC CE need not be introduced, allowing reduction in UE loads and the like to be expected.

For example, the UE may receive an activation command for an RRC parameter PUCCH-SpatialRelationInfo or may be provided with PUCCH-SpatialRelationInfo for a PUCCH resource.

The UE may receive an activation command for a MAC CE for a TCI state or may receive an RRC parameter tci-StatesPDCCH-ToAddList/tci-StatesPDCCH-ToReleaseList.

For the predicted BFR acceptance information, a window to monitor a PDCCH/window to receive a MAC CE on a PDSCH may be used. The UE may be configured with the size/start point of the window. The window configured may be used only for the predicted BFR or may be shared with the (typical Rel-15/16) BFR (configured by BeamFailureRecoveryConfig). In the present disclosure, simply "BFR" may mean BFR (for example, PCell BFR, SCell BFR) defined in Rel-15/16 NR.

The UE may determine the size/start point of the window on the basis of a specific rule, on the basis of any one or a combination of physical layer signaling (for example, DCI), higher layer signaling (for example, RRC signaling, MAC CE), and a specific signal/channel, or on the basis of a UE capability.

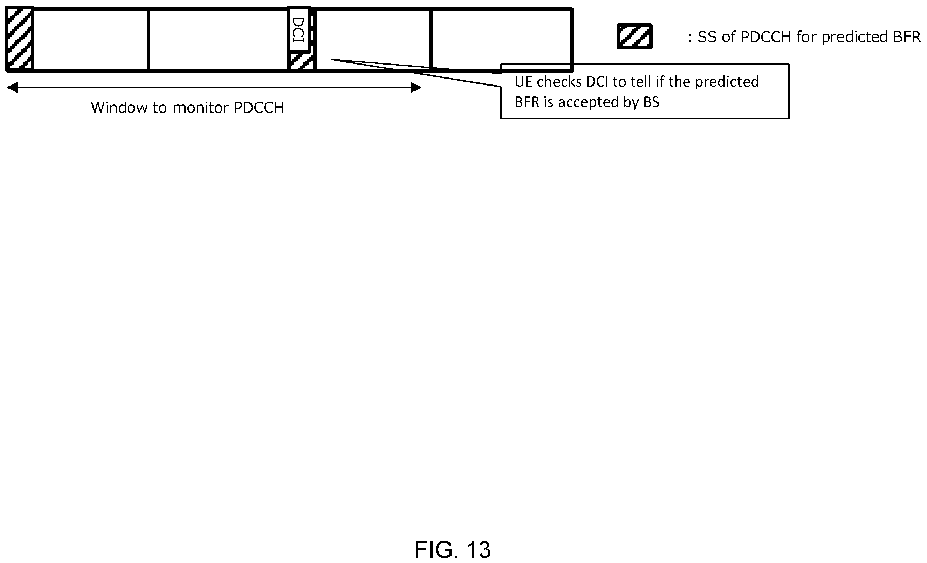

FIG. 13 is a diagram to show an example of reception of the predicted BFR acceptance information according to Embodiment 1.5. In this example, the UE may expect to receive a PDCCH (DCI) indicating the predicted BFR acceptance information, in an RAR window after the PRACH transmission.

### [Embodiment 1.6]

After the reception of the predicted BFR response, the UE may control transmission of a specific signal. For example, after the reception of the predicted BFR response, the UE may perform update of QCL/spatial relation with respect to a PUCCH/PDCCH. Note that such update of QCL/spatial relation may be referred to as application of the predicted BFR. In the present disclosure, the predicted BFR response and the predicted BFR acceptance information may be interchangeably interpreted.

After the reception of the predicted BFR response, the UE may compute a transmit power on the basis of a candidate RS for the predicted BFR and/or may initialize (reset) a closed loop term (for example, a correction value/accumulated value based on a transmit power control (TPC) command) in the calculation formula for the transmit power. Note that, the initializing of the term may mean setting the value of the term equal to zero.

In Embodiment 1.6, the UE may transmit a PUCCH by using the same spatial filter (spatial domain filter) as in the last PRACH transmission, or may transmit the PUCCH by using a spatial filter the same as a spatial filter corresponding to an RS index indicated by a MAC CE (for example, predicted BFR MAC CE).

The UE may monitor a PDCCH in a certain CORESET (for example, CORESET with index 0) or in every CORESET by using the same antenna port QCL as of a candidate RS for the predicted BFR.

Regarding which cell the predicted BFR is applied for, the UE may apply the predicted BFR only for a cell where the predicted BFR is accepted. The cell where the predicted BFR is accepted may be judged/ascertained based on at least one of the predicted BFR response and a cell where a trigger PRACH having been transmitted.

The UE may judge when to apply the predicted BFR complies with at least one of the following:
- after a specific number of symbols/slots from transmission or reception of the predicted BFR response/trigger signal (PRACH/SR/MAC CE); and
- after a time offset, in a MAC CE, for the predicted BFR to be activated or a time offset configured by RRC (from transmission or reception of the MAC CE/RRC).

Note that the UE may determine the specific number on the basis of a specific rule, on the basis of any one or a combination of physical layer signaling (for example, DCI), higher layer signaling (for example, RRC signaling, MAC CE), and a specific signal/channel, or on the basis of a UE capability.

The UE may calculate the time offset on the basis of a parameter of the MAC CE or may calculate the time offset on the basis of a resource (for example, a resource for the PRACH/SR/MAC CE/predicted BFR response) for the predicted BFR procedure.

The time offset may be notified, to the UE, included in the predicted BFR response.

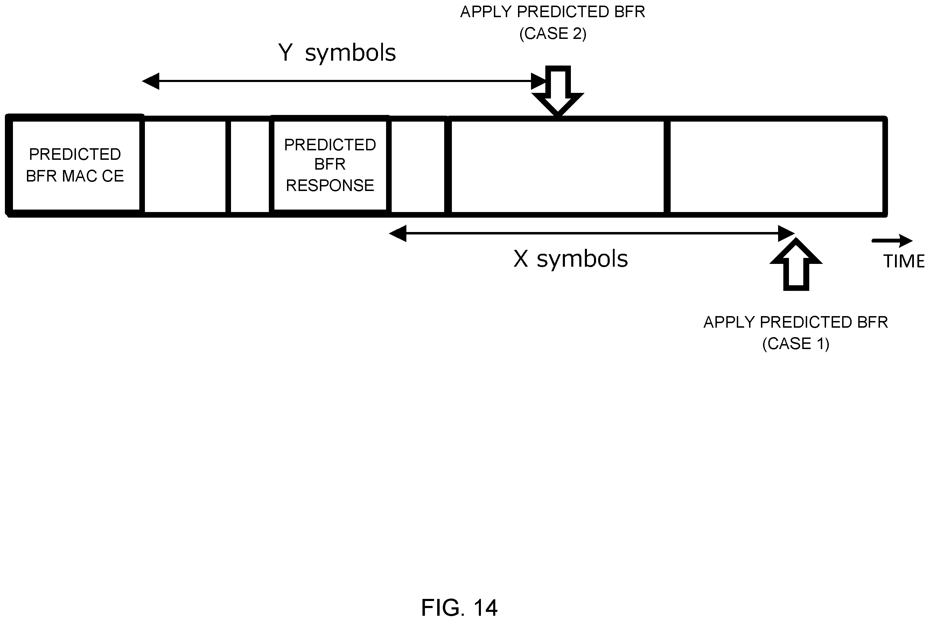

FIG. 14 is a diagram to show an example of the timing to apply the predicted BFR according to Embodiment 1.6. FIG. 14 shows an example (case 1) where the predicted BFR is applied after a specific number (X) of symbols from reception of the predicted BFR response and an example (case 2) where the predicted BFR is applied after a time offset (Y symbols) indicated by a predicted BFR MAC CE from transmission of the MAC CE.

According to the first embodiment described above, the predicted BFR can be appropriately performed.

### <Second Embodiment>

The second embodiment relates to a predicted BFR procedure triggered using an SR/MAC CE.

The predicted BFR procedure in the second embodiment may be broadly divided into the following embodiments:
- Embodiment 2.1: assess a future radio link quality;
- Embodiment 2.2: trigger predicted BFR using an SR/MAC CE;
- Embodiment 2.3: transmit a predicted BFR MAC CE;
- Embodiment 2.4: receive information indicating that the predicted BFR is accepted by the base station; and
- Embodiment 2.5: transmit a signal after reception of a predicted BFR response (update QCL/spatial relation).

Note that the transmission of the PRACH and the reception of the BFR response may be performed in a cell different from a cell (cell to which a candidate RS belongs) where a beam failure is predicted. The predicted BFR response may be a random access response (RAR) transmitted in response to the predicted BFR MAC CE in Embodiment 2.3.

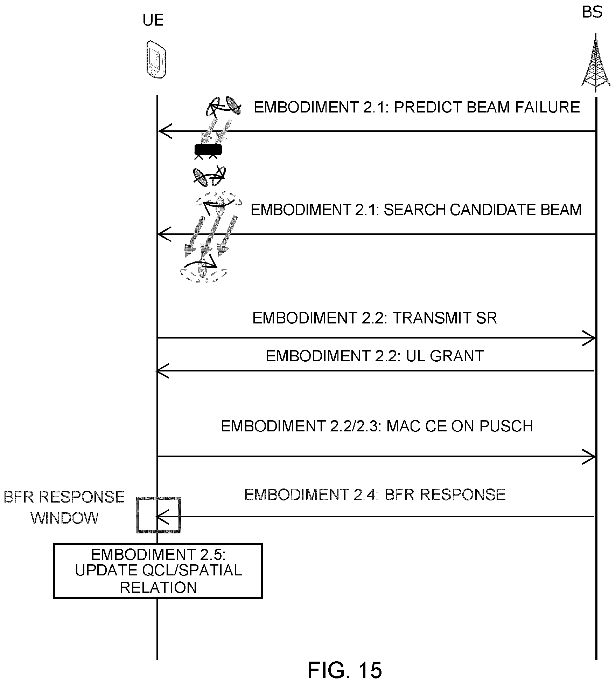

FIG. 15 is a diagram to show an example of the predicted BFR procedure according to the second embodiment. Note that Embodiments 2.1, 2.4, and 2.5 may be similar to Embodiments 1.1, 1.5, and 1.6, respectively, and thus the description is omitted.

In Embodiment 2.2, as necessary, the UE may transmit an SR for the predicted BFR. In Embodiment 2.3 the UE transmits the predicted BFR MAC CE.

Hereinafter, Embodiment 2.2 to Embodiment 2.3 will be described.

### [Embodiment 2.2]

In Embodiment 2.2, the UE may trigger the predicted BFR by using an SR/MAC CE, on the basis of Embodiment 2.1. The MAC CE (PUSCH) for the predicted BFR may be referred to as a MAC CE (PUSCH) for a predicted BFR request or may be referred to as a predicted BFR request.

The UE may transmit an SR for the predicted BFR for a PUSCH on which the MAC CE (predicted BFR MAC CE) for the predicted BFR is to be transmitted. Here, the UE may be provided with (configured with) a scheduling request ID for the predicted BFR, by a higher layer parameter. The UE may judge that the scheduling request ID for the predicted BFR is the same as a scheduling request ID (schedulingRequestID-BFR-SCell) for SCell BFR in Rel. 16.

Note that, when a PUSCH resource available is already scheduled/allocated, the UE may skip the transmission of the SR.

The UE may transmit the predicted BFR MAC CE by using the PUSCH resource. Note that the PUSCH resource may be a resource scheduled by DCI, may be a configured grant PUSCH resource, or may be a PUSCH resource configured for the predicted BFR.

### [Embodiment 2.3]

The predicted BFR MAC CE may include information (field) of at least one of the following:
- information indicating a cell (cell where a predicted beam failure occurs) where the BFR is predicted (a serving cell index, a secondary cell (SCell) index, and/or information indicating whether it is a special cell (SpCell));
- information indicating a candidate RS (for example, an RS index);
- information indicating the type of the RS index (for example, a CSI-RS resource indicator (CRI), an SS/PBCH block resource indicator (SS/PBCH Block Indicator (SSBRI)));
- a time when the predicted beam failure occurs;
- a time when the predicted BFR is performed;
- information indicating whether the predicted BFR or a (normal) BFR;
- information indicating the presence of the candidate RS; and
- the prediction accuracy information (described in Embodiment 1.4).

The RS index of the candidate RS may correspond to an index of a CSI-RS/SSB resource that is recommended to switch to by the UE or that has a measurement result (for example, L1-RSRP) higher than a threshold value.

The time when the predicted beam failure occurs/time when the predicted BFR is performed may be expressed as a time offset (for example, slot offset, symbol offset) with a resource (for example, resource for PRACH/SR/MAC CE/predicted BFR response) for the predicted BFR procedure being as a reference.

The information indicating whether the predicted BFR or the (normal) BFR may indicate whether an octet including information of the time offset is present in the MAC CE, for example.

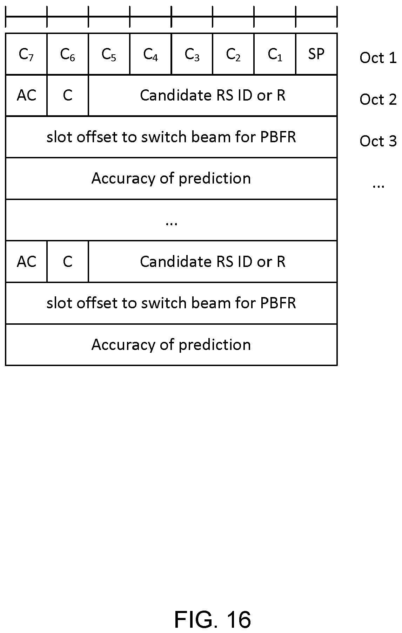

FIG. 16 is a diagram to show an example of the predicted BFR MAC CE according to Embodiment 2.3. The MAC CE may include Cᵢ fields, an SP field, AC fields, C fields, candidate RS ID fields, slot offset fields, accuracy-of-prediction fields, and the like.

Each Cᵢ field corresponds to a bit field indicating whether a predicted beam failure is detected in a cell with a serving cell index i (for example, '1' indicates that a failure is detected). The SP corresponds to a bit field indicating whether a predicted beam failure is detected in a special cell.

Each AC field may indicate whether a candidate RS ID field is present in the same octet. Each C field may indicate whether an octet (for example, a slot offset field, an accuracy-of-prediction field) for the predicted BFR is included. Each slot offset field may indicate a time when the predicted BFR is performed. Each accuracy-of-prediction field may indicate prediction accuracy information.

The UE may judge that the size of the predicted BFR MAC CE is fixed (fixed in advance), may judge based of an RRC parameter, or may judge based on a field of the MAC CE.

For example, when the (maximum) number of serving cells configured is X (X is an integer), the number of octets expressing the bit field indicating a cell where the BFR is predicted may be expressed as ceil (X/8). Note that ceil (*) indicates a ceiling function.

The field of the MAC CE may correspond to at least one of the following:
- the number of fields indicating beam failure detection (for example, the number of fields of one bit indicating beam failure detection corresponding to a cell);
- information indicating whether a certain octet presents in the MAC CE (for example, the C field described above); and
- a field indicating the number of beam failures reported (or a field of number of beam failures).

The UE may include, in the predicted BFR MAC CE, octets indicating a candidate RS ID, a time offset, a cell index, and/or the like, as many as the number of beam failures indicated in the field indicating the number of beam failures reported, for example.

According to the second embodiment described above, the predicted BFR can be appropriately performed.

### <Third Embodiment>

A third embodiment relates to control in which the UE supports the BFR and the predicted BFR at the same time.

The UE may notify, to the base station, whether the BFR or the predicted BFR by using at least one of the following:
- a PRACH resource;
- a PUCCH resource;
- information, indicating whether the predicted BFR or the BFR, in a BFR MAC CE; and
- a time offset.

For example, the UE may transmit a PRACH for the predicted BFR by using a PRACH resource configured differently from that for the BFR.

The UE may transmit an SR for the predicted BFR by using a PUCCH resource configured differently from that for the BFR.

When requesting the BFR, the UE may set a time offset to zero and report the time offset.

The UE may provide priority to either of the predicted BFR response or the BFR response. Providing priority to the BFR response corresponds to providing priority to the BFR.

For example, when the BFR is triggered later than the predicted BFR and the BFR response is received earlier than the predicted BFR response, the UE may ignore the predicted BFR (or predicted BFR corresponding to a serving cell specified by the predicted BFR or to every cell). In this case, the UE may perform the processing thereafter on the basis of the BFR response.

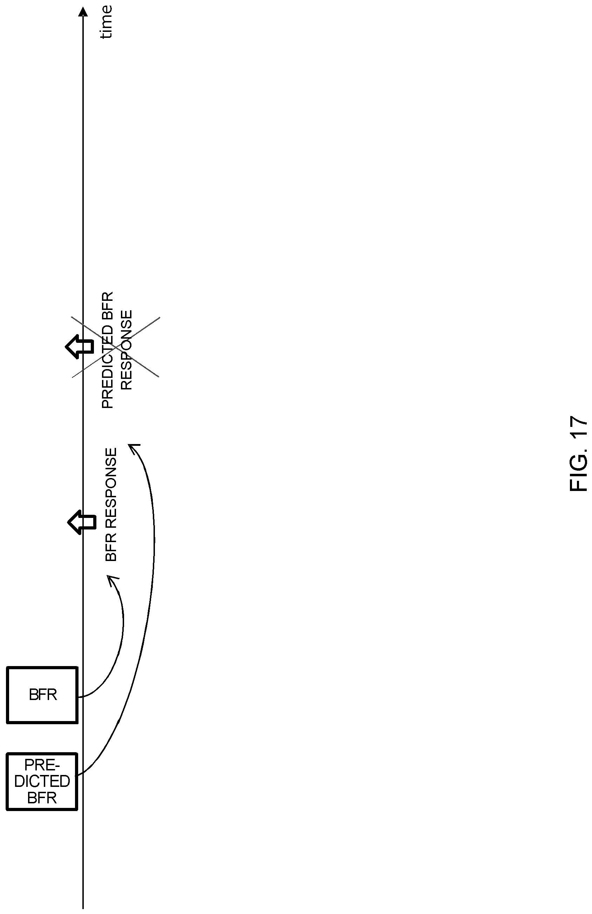

FIG. 17 is a diagram to show an example of priority control of the BFR and the predicted BFR according to a third embodiment. In this example, when the BFR is triggered later than the predicted BFR and the BFR response is received earlier than the predicted BFR response, the UE may judge that the BFR is successfully completed based on the BFR response and determine update of the spatial relation/TCI state thereafter on the basis of the BFR. The UE may ignore the predicted BFR response received after the BFR response and, after receiving the BFR response, need not monitor a PDCCH for the predicted BFR response.

According to the third embodiment described above, the beam failure recovery can be appropriately performed even when the UE support both the BFR and the predicted BFR.

### <Other>

In the present disclosure, the predicted value is described assuming one value, but this is not restrictive. For example, the predicted value may be computed as a probability density function (PDF)/cumulative distribution function (CDF) and, as predicted CSI information, information required to indicate the PDF/CDF may be reported.

At least one of the embodiments described above may be applied only to a UE that has reported a specific UE capability or that supports the specific UE capability.

The specific UE capability may indicate at least one of the following:
- whether to support a specific operation/information according to each embodiment;
- the maximum number of cells to support the predicted BFR;
- the maximum number of RSs to be monitored for the predicted BFR; and
- the accuracy and performance of the predicted BFR.

The UE capability may be reported per frequency, may be reported per frequency range (for example, Frequency Range 1 (FR1), Frequency Range 2 (FR2), FR2-1, FR2-2), may be reported per cell, may be reported per UE, and/or may be reported per subcarrier spacing (SCS).

The UE capability may be reported commonly to time division duplex (TDD) and frequency division duplex (FDD) or may be reported individually.

At least one of the embodiments described above may be applied to a case where the UE is configured with specific information related to the embodiment described above by higher layer signaling. For example, the specific information may be information indicating activation of the predicted BFR, any RRC parameter for a specific release (for example, Rel. 18), and/or the like.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

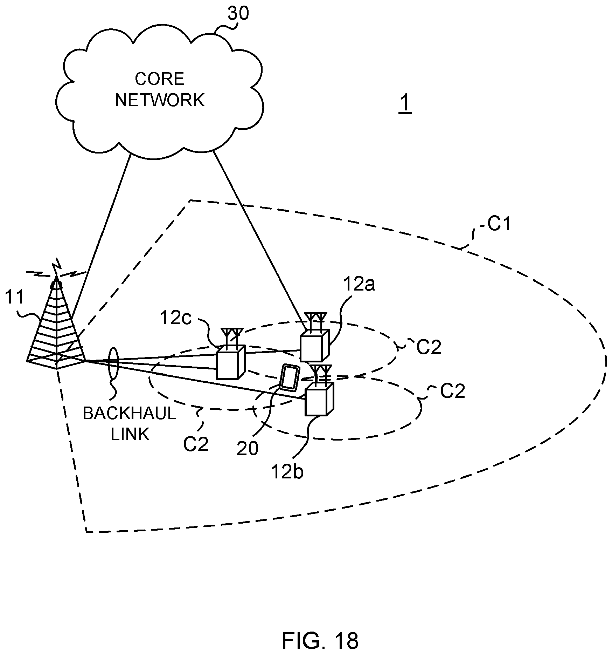

FIG. 18 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multicarrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

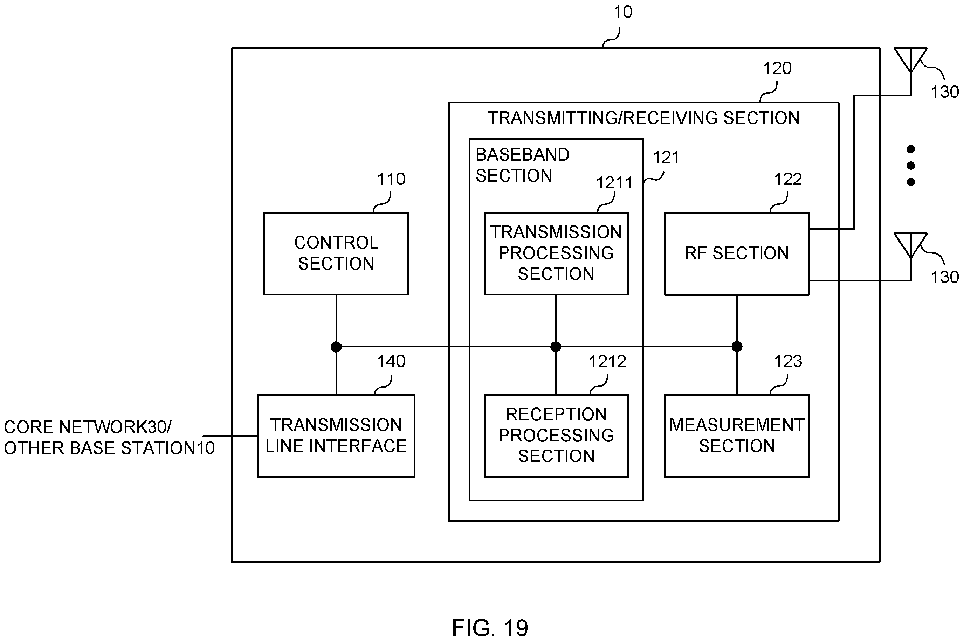

FIG. 19 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data, control information, and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that, based on a predicted radio link quality at a future time computed based on a radio link quality corresponding to one or more reference signals, the transmitting/receiving section 120 may transmit, to the user terminal 20, configuration information (for example, an information element "beamFailureRecoveryConfig") for detection of a predicted beam failure.

The transmitting/receiving section 120 may receive, from the user terminal 20, a random access channel (PRACH, random access preamble) for predicted beam failure recovery triggered based on the detection of the predicted beam failure.

The transmitting/receiving section 120 may receive, from the user terminal 20, information related to the accuracy of prediction of the predicted radio link quality.

The transmitting/receiving section 120 may receive, from the user terminal 20, an uplink shared channel (PUSCH) for the predicted beam failure recovery triggered based on the detection of the predicted beam failure.

### (User Terminal)

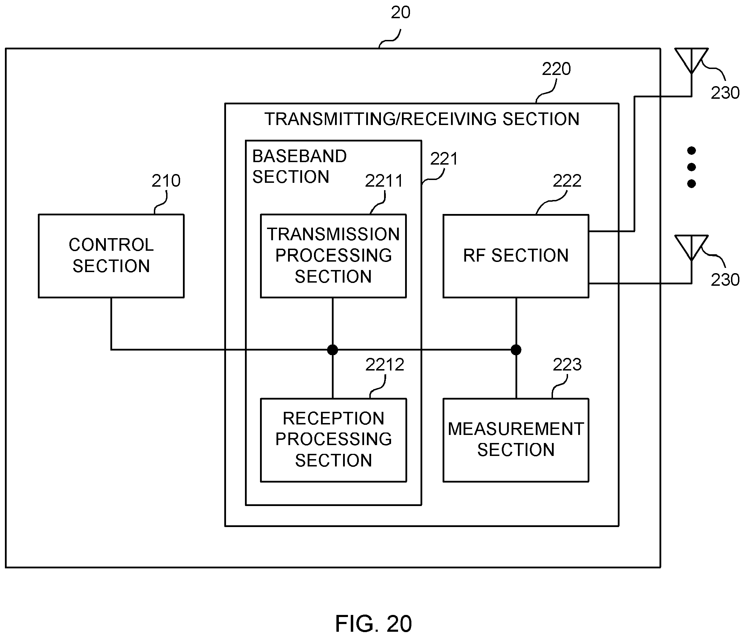

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may compute a radio link quality corresponding to one or more reference signals.

The control section 210 may detect a predicted beam failure on the basis of a predicted radio link quality at a future time computed based on the radio link quality.

The control section 210 may detect the predicted beam failure assuming that the future time during a timer running is the same.

The control section 210 may perform control to transmit a random access channel for predicted beam failure recovery triggered based on the detection of the predicted beam failure.

The control section 210 may transmit information related to a time when the predicted beam failure recovery is to be performed.

The transmitting/receiving section 220 may transmit information related to the accuracy of prediction of the predicted radio link quality.

The transmitting/receiving section 220 may receive information related to whether the predicted beam failure recovery triggered based on the detection of the predicted beam failure is accepted.

After receiving the information related to whether the predicted beam failure recovery is accepted, the control section 210 may update quasi-co-location or spatial relation with respect to a specific signal.

The transmitting/receiving section 220 may transmit an uplink shared channel (PUSCH) for the predicted beam failure recovery triggered based on the detection of the predicted beam failure.

The transmitting/receiving section 220 may transmit a Medium Access Control control element (MAC Control Element (CE)) for the predicted beam failure recovery on the uplink shared channel.

The MAC CE may include information related to a time when the predicted beam failure occurs, or may include information indicating whether the predicted beam failure recovery or beam failure recovery.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (separate apparatus), for example, via wire, wireless, or the like, and using these plurality of pieces of apparatus (these plurality of apparatus). The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

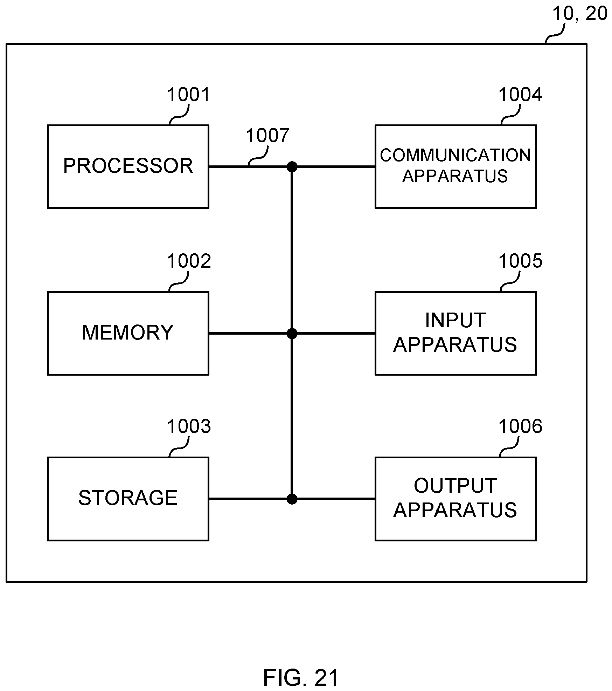

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus (between apparatus).

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware (these hardware).

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs) .

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that computes a radio link quality corresponding to one or more reference signals;
a control section that detects a predicted beam failure on the basis of a predicted radio link quality at a future time computed based on the radio link quality; and
a transmitting section that transmits information related to accuracy of prediction of the predicted radio link quality.

2. The terminal according to claim 1, wherein
the receiving section receives information related to whether predicted beam failure recovery triggered based on detection of the predicted beam failure is accepted.

3. The terminal according to claim 2, wherein
the control section updates quasi-co-location or spatial relation with respect to a specific signal after receiving the information related to whether the predicted beam failure recovery is accepted.

4. A radio communication method for a terminal, the radio communication method comprising:
computing a radio link quality corresponding to one or more reference signals;
detecting a predicted beam failure on the basis of a predicted radio link quality at a future time computed based on the radio link quality; and
transmitting information related to accuracy of prediction of the predicted radio link quality.

5. A base station comprising:
a transmitting section that transmits, to a terminal, configuration information for detection of a predicted beam failure on the basis of a predicted radio link quality at a future time computed based on a radio link quality corresponding to one or more reference signals; and
a receiving section that receives, from the terminal, information related to accuracy of prediction of the predicted radio link quality.
